# EUROPÄISCHE PATENTSCHRIFT

(11) **EP 0 978 234 B1**
(45) Veröffentlichungstag und Bekanntmachung des Hinweises auf die Patenterteilung: **29.10.2003**
(21) Anmeldenummer: 99113819.9
(22) Anmeldetag: 15.07.1999
(51) Int. Cl.: A01K 5/02, A01K 9/00

(54) **Vorrichtung zum Aufheizen von flüssigem Nahrungsmittel für Tiere**
Installation for heating liquid animal feed
Dispositif à chauffer l'alimentation liquide pour animaux

(30) Priorität: 03.08.1998 DE 19834890
(43) Veröffentlichungstag der Anmeldung: 09.02.2000
(73) Patentinhaber: Förster, Martin, 78234 Engen (DE)
(72) Erfinder: Förster, Martin, 78234 Engen (DE)
(74) Vertreter: Weiss, Peter, Dr.

(56) Entgegenhaltungen:
- DE-A- 4 028 490
- DE-B- 1 275 747
- FR-A- 1 489 217
- GB-A- 2 162 735

## Beschreibung

Die vorliegende Erfindung betrifft eine Vorrichtung zum Aufheizen von flüssigem Nahrungsmittel für Tiere, vorzugsweise von in einen Tränkeautomaten einzubringender Milch, wobei eine in einem Behälter angeordnete Einrichtung zum Transportieren von Nahrungsmitteln, insbesondere Rohrspirale von einer, die Einrichtung aufheizenden Flüssigkeit umströmbar ist.

Eine derartige Vorrichtung zum Aufheizen von flüssigem Nahrungsmittel ist bspw. aus dem Deutschen Gebrauchsmuster G 89 10 932 bekannt. Dort wird eine Flüssigkeit zum Erwärmen einer in einem Behälter eingesetzten Rohrschlange, welche zum Transport von Nahrungsmittel dient, mittels Heizelementen erwärmt. Eine Umwälzung von Flüssigkeit im Behälter geschieht mittels eines motorbetriebenen Schaufelrades.

Nachteilig daran ist, dass Dichtungsprobleme zwischen Schaufelrad und Behälter auftreten können und zusätzlich apparativer Aufwand notwendig ist, um eine Umwälzung von Flüssigkeit im Behälter zu erzeugen.

Die DE 40 28 490 A1 beschreibt ein Verfahren und eine Vorrichtung zum Bevorraten einer kleinen Menge an Trinkwasser auf einem ausreichend hohen Temperaturniveau. Dabei wird Trinkwasser durch einen Brenner geleitet und gelangt über eine Speichervorlaufleitung in einen Speicher. Von dort wird die erhitzte Flüssigkeit koaxial einem Führungsrohr zugeleitet und aus diesem dem Kreislauf zurückgeführt. In dem Führungsrohr ist ein Sekundärwärmetauscher zum Aufheizen von flüssigem Wasser eingesetzt.

Der vorliegenden Erfindung liegt die Aufgabe zugrunde, eine Vorrichtung der o. g. Art zu schaffen, mit welcher ein Wärmeaustausch mit Flüssigkeit im Behälter und einer darin angeordneten Einrichtung, insbesonderen Rohrspirale, zum Transport von Nahrungsmitteln, verbessert wird. Ferner sollen die Messergebnisse und Messgenauigkeiten, sowie auch die Regelung der Temperatur verbessert werden. Es sollten zudem Herstellungs- und insbesondere Wartungskosten eingespart werden.

Zur Lösung dieser Aufgabe führt, dass zur radialen und axialen Umwälzung der Flüssigkeit im Behälter diese durch zumindest eine im Behälter vorgesehen Öffnung in etwa radial in den Behälter einströmbar ist, wobei einends im Behälter ein Einlass und andernends ein Auslass zum Zuführen und Abführen der Flüssigkeit vorgesehen ist.

Bei der vorliegenden Erfindung wird vorgewärmte Flüssigkeit aus einer Quelle oder aus einem Speicher dem Behälter zugeführt. Die Besonderheit der vorliegenden Erfindung liegt darin, dass die Flüssigkeit über einen Einlass und insbesondere über eine vorzugsweise radial ausgerichtete Öffnung radial in den Behälter ggf. auch mittels einer Düse eingebracht wird. Dies kann auch mit Druck geschehen. Hierdurch wird die Flüssigkeit im Behälter radial beschleunigt. Durch gleichzeitiges Entnehmen oder Abführen der Flüssigkeit über den Auslass bzw. in einen Boiler und/oder Tränkeautomaten, insbesondere Mischbehälter wird die radial im Behälter beschleunigte Flüssigkeit axial bewegt. Hierdurch ergibt sich eine optimale Umströmung und Umwälzung der Einrichtung, insbesondere der Rohrspirale. Vorzugsweise wird in einer Wickelrichtung der Rohrspirale die Flüssigkeit über die radial ausgerichtete Öffnung, insbesondere über den Einlass im Behälter radial beschleunigt.

Vom vorliegenden Erfindungsgedanken soll jedoch auch umfasst sein, dass die Öffnung ggf. in einer winkeligen Stellung zwischen einer radialen und einer axialen Lage im Behälter angestellt sein kann.

Der Einlass ist vorzugsweise einends und der Auslass andernends und gegenüberliegend in einem Zylinderelement des Behälters vorgesehen.

Es soll ebenfalls daran gedacht sein, das Nahrungsmittel, welches über die Rohrspirale durch den Behälter transportiert wird im Gegen- oder Gleichstromverfahren zur Bewegungsrichtung der Flüssigkeit im Behälter zu transportieren.

Die Flüssigkeit, welche im Behälter intern bspw. über Heizelemente oder extern über bspw. einen Boiler erwärmt wird, kann auch zur Zubereitung des Nahrungsmittels im Tränkeautomaten dienen. Die Flüssigkeit kann aus einem separaten Flüssigkeitsauslass oder aber auch aus der Flüssigkeitsleitung des Auslasses selbst entnommen werden.

Bevorzugt ist die Flüssigkeit Wasser. Es können jedoch auch hier andere Medien, wie bswp. Öle od. dgl. verwendet werden, um die Rohrspirale und insbesondere das darin transportierte Nahrungsmittel zu erwärmen.

Bevorzugt ist der Behälter waagrecht angeordnet. In dieser waagrechten Lage ist die Rohrspirale von einem bevorzugt spiralförmigen Thermostatelement umgeben. Das Thermostatelement umfängt zumindest teilweise die Wicklungen der Rohrspirale. Hierüber lässt sich exakt die Temperaturen, welche in der Flüssigkeit und welche im Nahrungsmittel herrschen, ermitteln und regeln.

Über die Strömungsgeschwindigkeit, Temperaturmessung und Beeinflussung der Temperatur im Speicher, insbesondere Boiler oder mittels Heizelementen kann exakt die Temperatur des Nahrungsmittels bestimmt und gesteuert werden. Durch die erfindungsgemässe Umwälzung im Behälter wird eine homogene Temperaturverteilung sowohl des Nahrungsmittels als auch der Temperatur der Flüssigkeit im Behälter auf sehr kostengünstige Weise erreicht.

Von Vorteil bei der vorliegenden Erfindung ist auch, dass bspw. herkömmliche Boiler als Speicher verwendet werden können an welche ein derartiger Behälter anschliessbar ist. Über Steuerventile oder Mischbatterien lässt sich die Menge der Flüssigkeit, welche den Behälter durchströmt, exakt regulieren. Auch lässt sich eine Feineinstellung der Temperatur bei bspw. einem Anschliesen an einer Mischbatterie an den Einlass, insbesondere an die Flüssigkeitsleitung vornehmen. Eine exakte Regelung und Steuerung im Betrieb ist hier ebenfalls möglich.

In einem letzten Ausführungsbeispiel der vorliegenden Erfindung ist daran gedacht, zusätzlich zumindest einen weiteren ggf. spiralförmigen Wärmetauscher in den Behälter einzusetzen. Dieser ist über eine Zulauf- und eine Ablaufleitung mit einem Wärmespeicher für Flüssigkeit verbunden. Dabei kann der Wärmespeicher als Boiler oder Abwärmespeicher ausgebildet sein. Hier kann beispielsweise eine Abwärme einer herkömmlichen Heizung zur zusätzlichen regelbaren Erwärmung der Flüssigkeit im Behälter benutzt werden. Ebenfalls soll auch vom vorliegenden Erfindungsgedanken umfasst sein, die Heizeinrichtung innerhalb, ausserhalb oder unterhalb der Rohrspirale im Behälter anzuordnen, um eine bestmögliche Wärmeübertragung zu ermöglichen.

Insgesamt ist mit der vorliegenden Erfindung eine Vorrichtung geschaffen, mit welcher auf einfache und kostengünstige Weise eine Umwälzung von Flüssigkeit im Behälter zur Erwärmung von Nahrungsmittel für Tiere verbessert und eine Temperaturverteilung sowie ein Wärmeübergang verbessert wird. Ferner lässt sich ein derartiger Behälter sehr universell einsetzen und an unterschiedlichste Systeme oder vorhandene Boiler anschliessen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht auf eine erfindungsgemässe Vorrichtung zum Aufheizen von flüssigem Nahrungsmittel;
Figur 2 eine schematisch dargestellte weitere Vorrichtung zum Aufheizen von flüssigem Nahrungsmittel als weiteres Ausführungsbeispiel gemäss Fig. 1;
Figur 3 eine schematisch dargestellte weitere Vorrichtung zum Aufheizen von flüssigem Nahrungsmittel als weiteres Ausführungsbeispiel gemäss Figur 2.

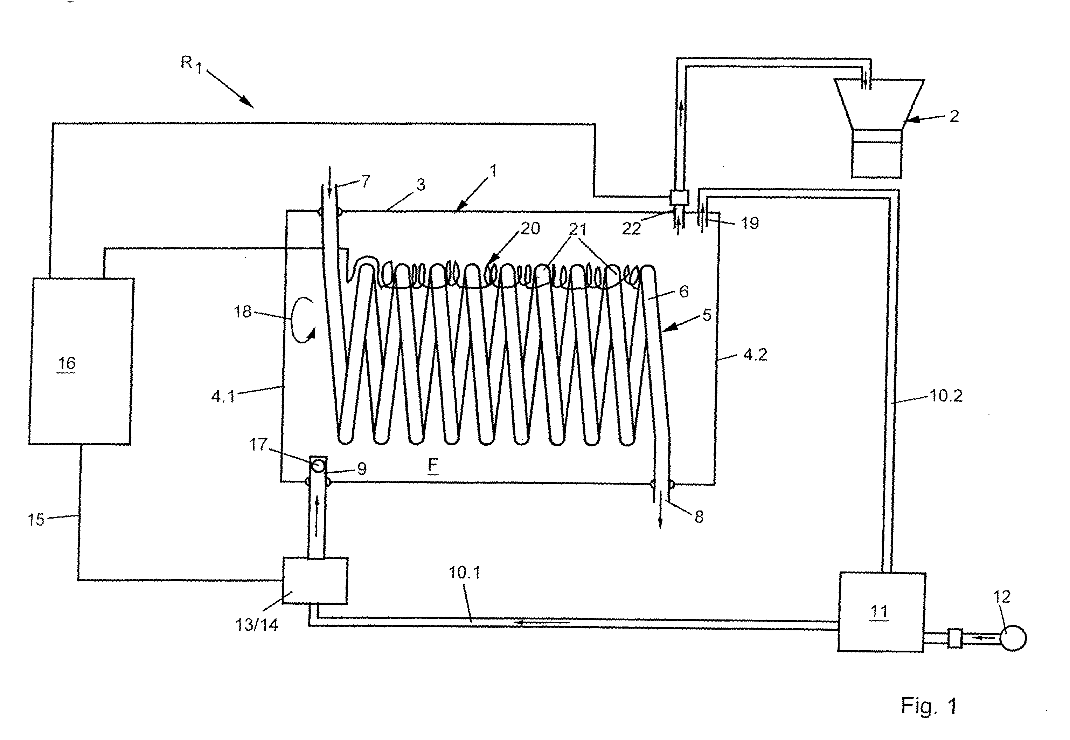

Gemäss Fig. 1 weist eine erfindungsgemässe Vorrichtung R₁ zum Aufheizen von flüssigem Nahrungsmittel für Tiere einen Behälter 1 auf, der im wesentlichen in waagrechter Lage extern oder intern einem Tränkeautomaten 2 zugeordnet sein kann. Bevorzugt ist der Behälter 1 aus einem Zylinderelement 3 gebildet, welches über stirnseitige Deckel 4.1, 4.2 verschliessbar ist. In dem Behälter 1 ist eine Einrichtung 5, insbesondere Rohrspirale 6 eingesetzt. Dabei weist diese Rohrspirale 6 beiderends Anschlüsse 7, 8 auf, welche aus dem Zylinderelement 3 vorzugsweise nahe dem Deckel 4.1 und 4.2 herausragen. Bevorzugt ist der Anschluss 7 an eine hier nicht dargestellte Nahrungsmittelquelle bspw. an eine Milchquelle angeschlossen. Der Anschluss 8 kann bspw. zu einer Saugstelle oder aber auch zu einem Tränkeautomaten 2 führen, um dort im Mischbehälter Nahrungsmittel zusätzlich zuzusetzen.

Vom vorliegenden Erfindungsgedanken soll auch umfasst sein, dass in umgekehrter Richtung das Nahrungsmittel, welches im Behälter 1 erwärmt werden soll, von dem Anschluss 8 zum Anschluss 7 befördert werden kann. Hier sind der Erfindung keine Grenzen gesetzt.

In dem Ausführungsbeispiel gemäss der vorliegenden Erfindung wird über einen Einlass 9, welcher nahe des Deckels 4.1 das Zylinderelement 3 durchgreift, eine Flüssigkeit F in den Behälter 1 transportiert. Die Flüssigkeit F gelangt über eine Flüssigkeitsleitung 10.1 aus einem Speicher 11 in den Behälter 1. An dem Speicher 11 kann auch eine Flüssigkeitsquelle 12 ggf. über ein hier nur angedeutetes Ventil mit Flüssigkeit versorgt werden.

Bevorzugt nahe des Behälters 1 ist in die Flüssigkeitsleitung 10.1 ein Steuerventil 13 oder eine Mischbatterie 14 eingesetzt. Das Steuerventil 13 oder die Mischbatterie 14 ist über eine Datenleitung 15 mit einer Steuereinrichtung 16 verbunden. Wird die Mischbatterie 14 verwendet, so kann diese zusätzlich kaltes Wasser über eine zweite, hier nicht dargestellte Leitung beziehen und die Temperatur, welche im Behälter 1 gewünscht ist direkt einstellen. Die Mischbatterie 14 lässt sich automatisch über die Steuereinrichtung 16 regeln.

Eine Besonderheit der vorliegenden Erfindung ist ferner, dass der Einlass 9 eine Öffnung 17 aufweist, welche radial in Umfangsrichtung des Zylinderelementes 3 ausgerichtet ist. Die Öffnung 17 des Einlasses 9 kann in oder entgegen einer Wickelrichtung 18 der Rohrspirale 6 ausgerichtet sein. Vorzugsweise ist im Behälter 1 dem Einlass 9 gegenüberliegend und nahe des Deckels 4.2 ein Auslass 19 vorgesehen, welcher die Flüssigkeit F wieder zurück über die Flüssigkeitsleitung 10.2 in den Speicher 11 transportiert.

Hierdurch wird über die vorzugsweise radial angeordnete Öffnung 17 des Einlasses 9 eine kreisartige, radiale Strömung entlang des Zylinderelementes 3 erzeugt. Diese bewegt sich durch den Behälter 1 radial und axial. Dabei soll eine bevorzugte Bewegungsrichtung bzw. Drehrichtung der Flüssigkeit vom Einlass 9 zum Auslass 19 radial in Wickelrichtung 18 der Rohrspirale 6 erfolgen.

Hierdurch wird eine erheblich günstigere Umwälzung und Wärmeübertragung zum Nahrungsmittel, welches innerhalb der Einrichtung 5, bzw. innerhalb der Rohrspirale 6 transportiert wird, geschaffen.

Damit die Temperatur der Flüssigkeit F und insbesondere des Nahrungsmittels innerhalb der Rohrspirale 6 sehr genau gemessen werden kann, ist der Einrichtung 5 zumindest ein Thermostatelement 20 zugeordnet. Das Thermostatelement 20 sitzt vorzugsweise oberhalb auf der Rohrspirale 6 auf. Dabei können einzelne hier nur angedeutete Wicklungen 21 des Thermostatelementes 20 die einzelnen Wicklungen 21 übergreifen und dazwischen angeordnet sein. Hierdurch erfolgt eine optimale Temperaturermittlung und Temperaturregelung sowie Temperaturbestimmung der Temperatur der Flüssigkeit F, der Temperatur der Einrichtung 5 und der Temperatur des Nahrungsmittels. Es hat sich als besonders günstig erwiesen, das Thermostatelement 20 oberhalb der Einrichtung 6 anzuordnen.

Im Speicher 11 wird die Flüssigkeit F, vorzugsweise Wasser, erwärmt und anschliessend dem Behälter 1 zugeführt. Diese Flüssigkeit F gelangt über den Auslass 19 in einen Kreislauf und kann im Speicher 11, sollte es erforderlich sein, wieder erneut auf die gewünschte Temperatur gebracht werden. Bspw. kann der Speicher 11 auch ein Boiler sein. An diesen kann dann der Behälter 1 angeschlossen werden. Hierdurch lassen sich erhebliche Kosten einsparen, wenn vorhandene Boiler oder Nachtspeicher, Wärmerückgewinnungsanlagen und Gas- und Ölheizungen od. dgl. auf diese Weise zusätzlich zur Beheizung von Wasser und Nahrungsmittel genutzt werden können.

Sollte der Druck eines derartigen Speichers 11 nicht genügen, so können zum Transport der Flüssigkeit F in der Flüssigkeitsleitung 10.1, 10.2 bspw. Pumpen od. dgl. Elemente vorgesehen sein. Auch ist daran gedacht, bspw. in die Flüssigkeitsleitung 10.2 ein Rückschlagventil einzusetzen.

Vom vorliegenden Erfindungsgedanken soll auch umfasst sein, dass entweder aus dem Behälter 1, insbesondere über das Zylinderelement 3 mittels eines Flüssigkeitsauslasses 22 vorgewärmte Flüssigkeit F insbesondere Wasser dem Tränkeautomaten 2 oder Mischbehälter zugeführt werden kann. Ein zusätzliches Vorwärmen von Wasser kann dann im Tränkeautomat 2 entfallen.

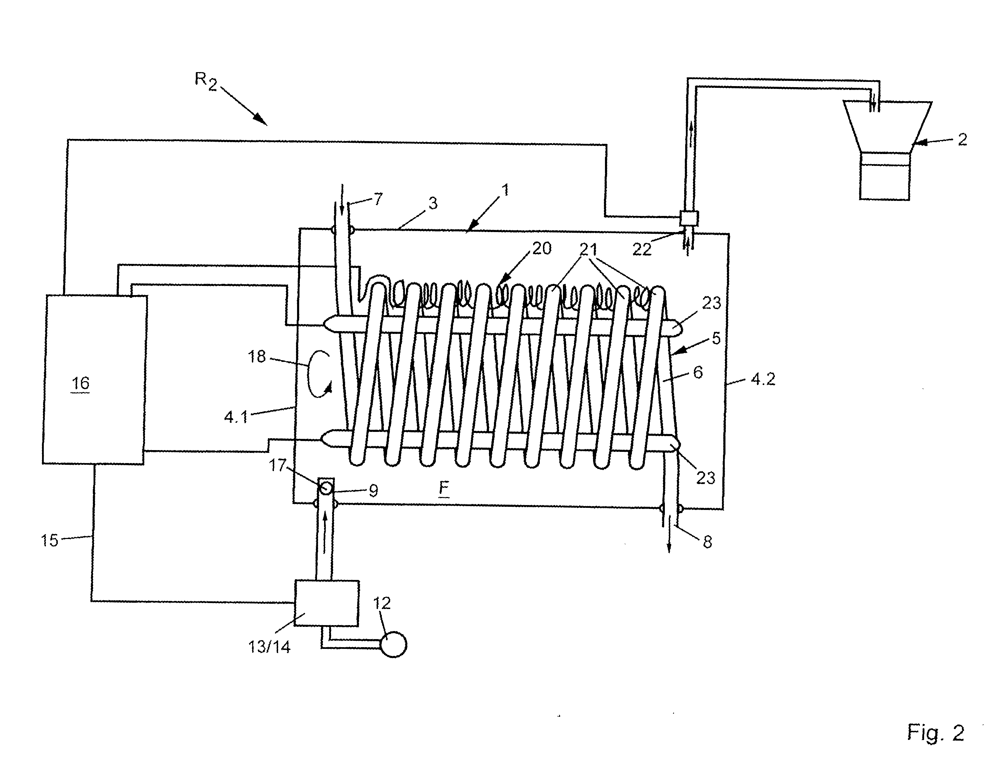

In einem weiteren Ausführungsbeispiel der vorliegenden Erfindung gemäss Figur 2 ist eine Vorrichtung R₂ aufgezeigt, bei welcher im wesentlichen die Vorrichtung gemäss Figur R₁ aufgezeigt ist. Unterschiedlich ist hier, dass über eine Flüssigkeitsquelle 12 ggf. mit nachgeschaltetem Steuerventil 13 oder Mischbatterie 14 der Behälter 1 mit Flüssigkeit F direkt versorgt wird. Die Flüssigkeit F wird allerdings entweder über die Mischbatterie 14 und/oder mittels in die Rohrspirale 6 eingesetzten Heizeinrichtungen 23 aufgeheizt. Die Heizeinrichtungen 23 erwärmen steuerbar die Flüssigkeit F, welche in oben beschriebener Weise radial und axial zum Flüssigkeitsauslass 22 bewegt wird. Die Heizeinrichtungen 23 sind ebenfalls, wie in Figur 2 angedeutet mit der Steuereinrichtung 16 verbunden.

In diesem Ausführungsbeispiel kann ein externer Speicher 11, insbesondere Boiler entfallen. Die Erwärmung der Flüssigkeit wird durch die Heizeinrichtungen 23 oder durch die Mischbatterie 14 direkt vorgenommen.

Auch das radiale Einbringen der Flüssigkeit F über die Öffnung 17 in den Behälter 1 bewirkt eine radiale Umwälzung, wobei beim Entnehmen von Flüssigkeit über den Flüssigkeitsauslass 22 diese zusätzlich axial bewegt wird. Auch hier können die unterschiedlichen Bewegungsrichtungen radial in und entgegen einer Wickelrichtung 18 der Rohrspirale 6 erfolgen.

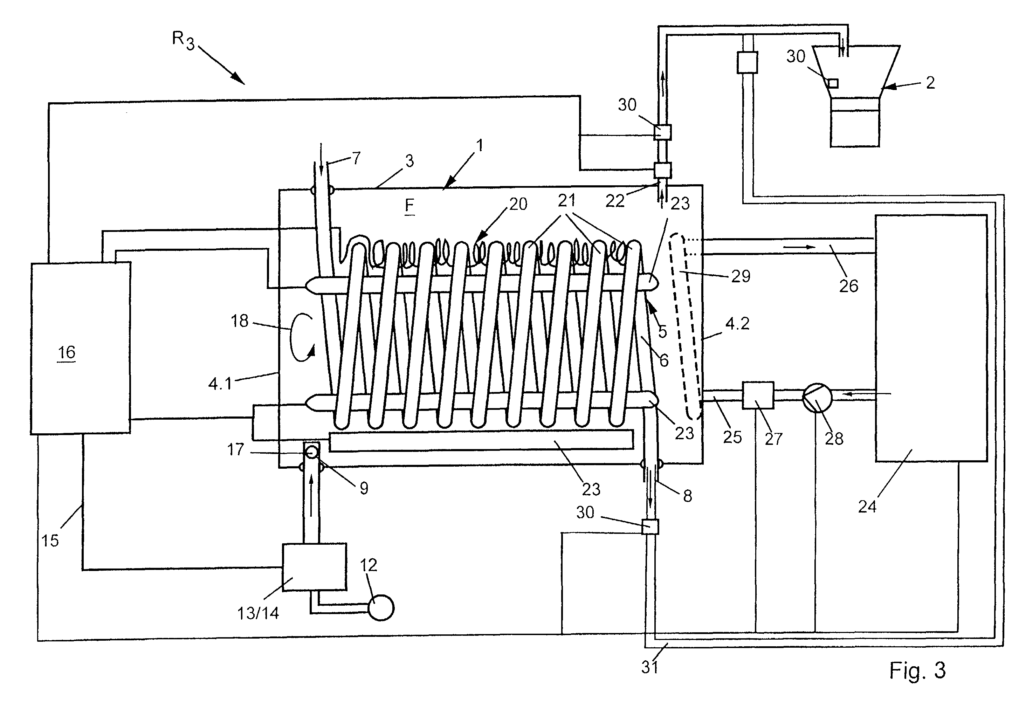

In dem Ausführungsbeispiel der vorliegenden Erfindung gemäss Figur 3 ist eine Vorrichtung R₃ dargestellt, welche im wesentlichen dem Ausführungsbeispiel gemäss Figur 2 entspricht. Zusätzlich ist dem Behälter 1 eine weitere Heizeinrichtung 23 zugeordnet, welche auch unterhalb der Rohrspirale 6 angeordnet sein kann. Von der vorliegenden Erfindung soll auch die Kombinationsmöglichkeit der Anordnung der Heizeinrichtung 23 innerhalb oder ausserhalb der Rohrspirale 6, insbesondere unter der Rohrspirale 6 im Behälter 1 umfasst sein.

Ferner ist im vorliegenden Ausführungsbeispiel an den Behälter 1 zusätzlich ein Wärmespeicher 24 für Flüssigkeit, insbesondere Boiler vorgesehen, welcher mit dem Behälter 1 über eine Zulaufleitung 25 und Ablaufleitung 26 in Verbindung steht. In die Zulaufleitung 25 ist ein regelbares Ventil 27 und eine daran anschliessende Förderpumpe 28 eingesetzt. Das Ventil 27 sowie die Förderpumpe 28 sind über hier nicht näher bezifferte Verbindungs- oder Datenleitungen mit der Steuereinrichtung 16 verbunden. Insbesondere kann der Wärmespeicher 24 auch über Abwärme gespeist werden.

Damit die Abwärme in den Behälter 1, insbesondere an dessen Flüssigkeit F abgegeben werden kann, kann im Behälter 1 an die Zulaufleitung 25 sowie Ablaufleitung 26 eine, hier gestrichelt dargestellte Spirale 29 anschliessen. Die Spirale 29 kann die Rohrspirale 6 durchgreifen. Hier sind mehrere Möglichkeiten denkbar, um die Spirale 29, beispielsweise auch als Wärmeaustauschregister auszubilden. Auf diese Weise lässt sich zusätzlich die Temperatur der Flüssigkeit F im Behälter 1 durch die Nutzung von Abwärme beeinflussen und erwärmen. Die Spirale 29 ist als Kreislauf mit der Zulaufleitung 25 sowie Ablaufleitung 26 mit dem Wärmespeicher 24 verbunden.

Wie ferner aus Figur 3 hervorgeht, schliesst an den Anschluss 8 eine Anschlussleitung 31 an, in welche ein Temperatursensor 30 eingesetzt ist. Dieser Temperatursensor 30 ist ebenfalls mit der Steuereinrichtung 16 verbunden. Auf diese Weise lässt sich unmittelbar ausserhalb des Behälters 1 eine Temperatur des durchströmten Mediums, insbesondere des Nahrungsmittels messen.

Die Anschlussleitung 31 mündet endseits in die Leitung des Flüssigkeitsauslasses 22, welcher in den Tränkeautomat führt. Dort kann ein hier nur angedeutetes Ventil zum Regeln des Durchflusses und zum Verhindern eines Rückflusses von Wasser in die Nahrungsmittelleitung vorgesehen sein.

Ebenfalls ist in die Leitung des Flüssigkeitsauslasses 22 ein nur angedeutetes Rückschlagventil und ggf. nachfolgend ein Temperatursensor 30 eingesetzt. Das Rückschlagventil hat die Aufgabe einerseits einen Mengenstrom zu regulieren und andererseits einen Rückfluss von Nahrungsmittel in den Behälter 1, welches ggf. in diese Leitung einmündet, zu verhindern.

Ein weiterer Temperatursensor 30 kann im Tränkeautomat 2 angeordnet sein, um direkt kurz vor der Abgabe des Nahrungsmittels an die entsprechenden Tränken die Temperatur zu messen und entsprechend über die Steuereinrichtung 16 zu steuern und zu regeln.

Hier sind verschiedene Regelungsmöglichkeiten denkbar, da hier eine Mehrzahl von Temperatursensoren 30 an unterschiedlichen Orten vorgesehen sind. Auch können unterschiedliche Wärme- oder Energiequellen genutzt werden, um die Temperatur im Behälter 1 zu regeln.

Im Rahmen der vorliegenden Erfindung soll auch liegen, dass beispielsweise erhitztes Nahrungsmittel, insbesondere erhitzte Milch nach einem Abtöten von Bakterien in die Einrichtung 5 durch den Anschluss 7 geleitet wird. Dann kann es vorteilhaft sein, diese hocherhitze Milch durch beispielsweise kaltes Wasser im Behälter 1 zu kühlen. Die entsprechenden Temperatursensoren 30 können auf diese Weise, durch das Zuführen und Abführen von kaltem Wasser die erwärmte Milch auf die gewünschte Temperatur bringen. In diesem Fall kann die Vorrichtung R₁ bis R₃ zum Erwärmen und/oder zum Abkühlen von Nahrungsmittel dienen.

| **Positionszahlenliste** | | | | | |
|---|---|---|---|---|---|
| 1 | Behälter | 34 | | 67 | |
| 2 | Tränkeautomat | 35 | | 68 | |
| 3 | Zylinderelement | 36 | | 69 | |
| 4 | Deckel | 37 | | 70 | |
| 5 | Einrichtung | 38 | | 71 | |
| 6 | Rohrspirale | 39 | | 72 | |
| 7 | Anschluss | 40 | | 73 | |
| 8 | Anschluss | 41 | | 74 | |
| 9 | Einlass | 42 | | 75 | |
| 10 | Flüssigkeitsleitung | 43 | | 76 | |
| 11 | Speicher | 44 | | 77 | |
| 12 | Flüssigkeitsquelle | 45 | | 78 | |
| 13 | Steuerventil | 46 | | 79 | |
| 14 | Mischbatterie | 47 | | | |
| 15 | Datenleitung | 48 | | | |
| 16 | Steuereinrichtung | 49 | | | |
| 17 | Öffnung | 50 | | | |
| 18 | Wickelrichtung | 51 | | | |
| 19 | Auslass | 52 | | | |
| 20 | Thermostatelement | 53 | | | |
| 21 | Wickelung | 54 | | | |
| 22 | Flüssigkeitsauslass | 55 | | | |
| 23 | Heizeinrichtung | 56 | | | |
| 24 | Wärmespeicher | 57 | | | |
| 25 | Zulaufleitung | 58 | | R₁ | Vorrichtung |
| 26 | Ablaufleitung | 59 | | R₂ | Vorrichtung |
| 27 | Ventil | 60 | | R₃ | Vorrichtung |
| 28 | Förderpumpe | 61 | | F | Flüssigkeit |
| 29 | Spirale | 62 | | | |
| 30 | Temperatursensor | 63 | | | |
| 31 | Anschlussleitung | 64 | | | |
| 32 | | 65 | | | |
| 33 | | 66 | | | |

## Patentansprüche

1. Vorrichtung zum Aufheizen von flüssigem Nahrungsmittel für Tiere, vorzugsweise von in einen Tränkeautomaten (2) einzubringender Milch, wobei eine in einem Behälter (1) angeordnete Einrichtung (5) zum Transportieren von Nahrungsmitteln, insbesondere Rohrspirale (6) von einer, die Einrichtung (5) aufheizenden Flüssigkeit (F) umströmbar ist,
**dadurch gekennzeichnet,**
**dass** zur radialen und axialen Umwälzung der Flüssigkeit (F) im Behälter (1) diese durch zumindest eine im Behälter (1) vorgesehene Öffnung (17) in etwa radial in den Behälter (1) einströmbar ist, wobei einends im Behälter (1) ein Einlass (9) und andernends ein Auslass (19,22) zum Zuführen und Abführen der Flüssigkeit (F) vorgesehen ist.

2. Vorrichtung nach Anspruch 1, **dadurch gekennzeichnet, dass** die Flüssigkeit (F) in oder entgegen einer Wickelrichtung (18) der Rohrspirale (6) in etwa radial in den Behälter (1) einströmt.

3. Vorrichtung nach Anspruch 1 oder 2, **dadurch gekennzeichnet, dass** zumindest eine Öffnung (17) des Einlasses (9) im Behälter (1) in etwa radial ausgerichtet ist.

4. Vorrichtung nach Anspruch 3, **dadurch gekennzeichnet, dass** die zumindest eine Öffnung (17) des Einlasses (9) im Behälter (1) in etwa radial ausgerichtet in einem Zylinderelement (3) des Behälters (1) angeordnet ist.

5. Vorrichtung nach wenigstens einem der Ansprüche 1 bis 4, **dadurch gekennzeichnet, dass** der Behälter (1) waagrecht angeordnet und der Einrichtung (5) zumindest ein Thermostatelement (20) zugeordnet ist.

6. Vorrichtung nach Anspruch 5, **dadurch gekennzeichnet, dass** das Thermostatelement (20) zumindest einzelne bevorzugt oben liegende Wicklungen (21) der Einrichtung (5) übergreift.

7. Vorrichtung nach wenigstens einem der Ansprüche 1 bis 6, **dadurch gekennzeichnet, dass** Einlass (9) und Auslass (19) über Flüssigkeitsleitungen (10.1, 10.2) mit einem externen Speicher (11) verbunden sind.

8. Vorrichtung nach Anspruch 7, **dadurch gekennzeichnet, dass** die Zuführung und/oder Abfuhr von Flüssigkeit (F) über zumindest ein in die Leitung (10.1) eingesetztes Steuerventil (13) oder Mischbatterie (14) ggf. über eine Steuereinrichtung (16) regelbar ist.

9. Vorrichtung nach Anspruch 7 oder 8, **dadurch gekennzeichnet, dass** aus dem Behälter (1) oder aus dem Auslass (19, 22) oder der Flüssigskeitsleitung (10.2) zusätzlich Flüssigkeit (F) zum Zuführen von erwärmter Flüssigkeit (F) einem Tränkeautomaten (2) entnehmbar ist.

10. Vorrichtung nach wenigstens einem der Ansprüche 1 bis 9, **dadurch gekennzeichnet, dass** im Behälter (1), insbesondere innerhalb der Rohrspirale (6) zum Erwärmen der Flüssigkeit (F) eine Mehrzahl von Heizelementen (23) vorgesehen ist.

11. Vorrichtung nach Anspruch 10, dadurch gekennzeichent, dass zumindest ein Heizelement (23) unterhalb oder innerhalb der Rohrspirale (6) im Behälter (1) angeordnet ist.

12. Vorrichtung nach wenigstens einem der Ansprüche 1 bis 11, **dadurch gekennzeichnet, dass** zumindest ein weiterer Wärmetauscher (29), insbesondere Spirale im Behälter vorgesehen ist, welcher über eine Zulaufleitung (25) und eine Ablaufleitung (26) mit einem Wärmespeicher (24) verbunden ist.

13. Vorrichtung nach Anspruch 12, **dadurch gekennzeichnet, dass** in die Zulaufleitung (25) ein ansteuerbares Ventil (27) und eine ansteuerbare Förderpumpe (28) eingesetzt ist.

## Claims

1. Apparatus for heating up liquid feed for animals, preferably milk which is to be introduced into an automatic drink-dispensing machine (2), a device (5) for transporting feeds, more especially a tubular coil (6), disposed in a container (1), being able to be traversed by a liquid (F) which heats up the device (5), **characterised in that**, to circulate the liquid (F) radially and axially in the container (1), said liquid can flow into the container (1) substantially radially through at least one opening (17) provided in the container (1), an inlet (9) in the container (1) at one end and an outlet (19, 22) at the other end being provided to supply and remove the liquid (F).

2. Apparatus according to claim 1, **characterised in that** the liquid (F) flows into the container (1) substantially radially, in or in opposition to a winding direction (18) of the tubular coil (6).

3. Apparatus according to claim 1 or 2, **characterised in that** at least one opening (17) of the inlet (9) in the container (1) is orientated substantially radially.

4. Apparatus according to claim 3, **characterised in that** the at least one opening (17) of the inlet (9) in the container (1) is disposed in a cylinder element (3) of the container (1) in a substantially radially orientated manner.

5. Apparatus according to at least one of claims 1 to 4, **characterised in that** the container (1) is disposed horizontally, and at least one thermostat element (20) is associated with the device (5).

6. Apparatus according to claim 5, **characterised in that** the thermostat element (20) overlaps at least individual, preferably upper windings (21) of the device (5).

7. Apparatus according to at least one of claims 1 to 6, **characterised in that** inlet (9) and outlet (19) are connected via liquid lines (10.1, 10.2) to an external storage unit (11).

8. Apparatus according to claim 7, **characterised in that** the supply and/or removal of liquid (F) are/is adjustable via at least one control valve (13) or mixing battery (14) inserted in the line (10.1), possibly via a control device (16).

9. Apparatus according to claim 7 or 8, **characterised in that** liquid (F) for supplying warmed liquid (F) to an automatic drink-dispensing machine (2) is additionally removable from the container (1) or from the outlet (19, 22) or from the liquid line (10.2).

10. Apparatus according to at least one of claims 1 to 9, **characterised in that** a plurality of heating elements (23) is provided in the container (1), more especially within the tubular coil (6), for warming the liquid (F).

11. Apparatus according to claim 10, **characterised in that** at least one heating element (23) is disposed in the container (1) below or within the tubular coil (6).

12. Apparatus according to at least one of claims 1 to 11, **characterised in that** at least one additional heat exchanger (29), more especially a coil, is provided in the container, which heat exchanger is connected to a heat storage unit (24) via a supply line (25) and a discharge line (26).

13. Apparatus according to claim 12, **characterised in that** an actuatable valve (27) and an actuatable feed pump (28) are inserted in the supply line (25).

## Revendications

1. Dispositif pour chauffer des aliments liquides pour animaux, de préférence du lait à alimenter vers un distributeur de boisson (2), autour d'un dispositif (5), disposé dans un réservoir (1), destiné à transporter des aliments, en particulier un serpentin tubulaire (6), pouvant circuler un liquide (F) chauffant le dispositif (5),
**caractérisé par le fait que**
pour le brassage radial et axial du liquide (F) dans le réservoir (1), celui-ci peut entrer environ radialement dans le réservoir (1), à travers au moins une ouverture (17) prévue dans le réservoir (1), à une extrémité du réservoir (1) étant prévue une entrée (9) et à l'autre extrémité une sortie (19, 22), pour amener et évacuer le liquide (F).

2. Dispositif selon la revendication 1, **caractérisé par le fait que** le liquide (F) pénètre environ radialement dans le réservoir (1), dans ou à l'encontre du sens d'enroulement (18) du serpentin tubulaire (6).

3. Dispositif selon la revendication 1 ou 2, **caractérisé par le fait qu'**au moins une ouverture (17) de l'entrée (9) dans le résrvoir (1) est orientée environ radialement.

4. Dispositif selon la revendication 3, **caractérisé par le fait que** l'au moins une ouverture (17) de l'entrée (9) dans le résrvoir (1) est disposée orientée environ radialement dans un élément cylindrique (3) du réservoir.

5. Dispositif selon au moins l'une des revendications 1 à 4, **caractérisé par le fait que** le réservoir (1) est disposé horizontalement et qu'au dispositif (5) est associé au moins un élément thermostat (20).

6. Dispositif selon la revendication 5, **caractérisé par le fait que** l'élément thermostat (20) vient en prise par-dessus au moins des enroulements individuels (21), de préférence supérieurs, du dispositif (5).

7. Dispositif selon au moins l'une des revendications 1 à 6, **caractérisé par le fait que** l'entrée (9) et la sortie (19) sont connectés à un accumulateur extérieur (11) par l'intermédiaire de conduits de liquide (10.1, 10.2).

8. Dispositif selon la revendication 7, **caractérisé par le fait que** l'amenée et/ou l'évacuation de liquide (F) peut être réglée par l'intermédiaire d'au moins une soupape de réglage (13), ou batterie de mélange (14), placée dans le conduit (10.1), éventuellement par l'intermédiaire d'un dispositif de réglage (16).

9. Dispositif selon la revendication 7 ou 8, **caractérisé par le fait que** du réservoir (1) ou de la sortie (19, 22) ou du conduit de liquide (10.2) peut être prélevé du fluide (F) supplémentaire pour l'amenée de liquide (F) chauffé à un distributeur de boisson (2).

10. Dispositif selon au moins l'une des revendications 1 à 9, **caractérisé par le fait que** dans le réservoir (1), en particulier à l'intérieur du serpentin tubulaire (6), sont prévus, pour le chauffage du liquide (F), une pluralité d'éléments chauffants (23).

11. Dispositif selon la revendication 10, **caractérisé par le fait que** l'au moins un élément chauffant (23) est disposé au-dessous ou à l'intérieur du serpentin tubulaire (6) dans le réservoir (1).

12. Dispositif selon au moins l'une des revendications 1 à 11, **caractérisé par le fait qu'**il est prévu au moins un autre échangeur de chaleur (29), en particulier un serpentin, dans le réservoir, relié, par l'intermédiaire d'un conduit d'amenée (25) et d'un conduit d'évacuation (26), à un accumulateur de chaleur (24).

13. Dispositif selon la revendication 12, **caractérisé par le fait que** dans le conduit d'amenée (25) sont placées une soupape amorçable (27) et une pompe de refoulement amorçable (28).
